# EUROPEAN PATENT SPECIFICATION

(11) **EP 3 141 381 B1**
(45) Date of publication and mention of the grant of the patent: **19.09.2018**
(21) Application number: 15789467.6
(22) Date of filing: 20.04.2015
(51) Int. Cl.: B29D 30/06, B60C 13/00, B29D 30/00, B29B 13/08, B60C 23/04, B29C 71/04, B29C 33/02, B29L 30/00, B29C 35/08, B29D 30/72, B29C 37/00

(54) **RELEASE AGENT REMOVAL METHOD, AND A TIRE**
VERFAHREN ZUR ENTFERNUNG EINES TRENNMITTELS UND REIFEN
PROCÉDÉ DE RETRAIT D'AGENT DE DÉMOULAGE ET PNEU

(30) Priority: 09.05.2014 JP 2014097722
(43) Date of publication of application: 15.03.2017
(73) Proprietor: Bridgestone Corporation, Tokyo 104-8340 (JP)
(72) Inventor: NAKAMURA, Toshiki, Tokyo 104-8340 (JP)
(74) Representative: Oxley, Robin John George
(86) International application number: PCT/JP2015/061976
(87) International publication number: WO 2015/170575

(56) References cited:
- EP-A1- 2 674 287
- EP-A2- 1 598 121
- EP-A2- 2 408 613
- WO-A2-2009/073539
- DE-U1-202012 104 243
- JP-A- H03 166 790
- JP-A- 2007 283 749
- JP-A- 2008 037 086
- JP-A- 2012 206 521
- JP-A- 2012 520 780
- JP-A- 2013 223 930
- JP-A- 2013 223 932
- JP-A- 2013 540 065
- JP-A- 2014 004 823
- US-A1- 2005 274 448

## Description

### BACKGROUND OF THE INVENTION

### 1. Field of the Invention

The present invention relates to a method for removing a mold release agent. In particular, the invention relates to a method for removing a mold release agent adhering to a tire side surface so as to affix an adherend to the tire side surface after a cure-molding process.

### 2. Description of the Related Art

Conventionally, the tire manufacturing process includes post-processes of affixing adherends to the inner and outer peripheral surfaces of a tire after cure-molding, in which designs, emblems, etc., are printed on the tire surface (Patent Document 1), a sealant for prevention of flat tire (Patent Document 2) or an acoustic absorbent to reduce noise of vehicular travel is applied, or a tire monitoring device for monitoring the tire inner pressure is attached to the inner surface of the tire. A process of removing mold release agent adhering to the tire surface after molding is carried out as a step prior to those post-processes. The mold release agent is applied to the surfaces of molds and bladder in the cure-molding process to make the stripping of the tire from the molds easier, but is found adhering to the tire surface at the stripping of the tire from the molds . In the release agent removal process, the mold release agent adhering to the tire surface is wiped off with a wash solution or removed together with the rubber by buffing.

### CONVENTIONAL ART DOCUMENT

### Patent Document

Patent Document 1: Japanese Unexamined Patent Application Publication No. 2013-100030
Patent Document 2: Japanese Unexamined Patent Application Publication No. 2004-262274
Reference is also made to EP 2408613 and US 2005/274448.

### SUMMARY OF THE INVENTION

### Problem to be Solved by the Invention

However, in the method of wiping off the mold release agent with wash solution, inconsistent wiping can leave remnants of mold release agent unwiped. And the necessity to perform a post-treatment to remove the wash solution left behind causes the loss of work efficiency. Also, in the method of removing the mold release agent by buffing, the mold release agent may be removed completely. However, it is difficult to remove the rubber in a uniform thickness along the curvatures of the tire surface.

The present invention has been made to solve the foregoing problems, and an object of the invention is to provide a method capable of removing mold release agent adhering to the side surface of the tire after a cure-molding process completely and improving the efficiency of removal operation.

### Means for Solving the Problem

To solve the above-described problems, this mold release agent removing method removes a mold release agent from an adherend region where an adherend is to be affixed to a side surface of a tire after a cure-molding process. In this method, a laser light having an intensity capable of removing rubber on the side surface of the tire in the adherend region is intermittently irradiated while it is moved along, so that a plurality of dents are formed in the adherend region with adjoining dents having edges overlapped with each other. Thus, the mold release agent adhering to the adherend region is removed together with rubber. Accordingly, the mold release agent can be removed from the adherend region easily and completely, thus improving the efficiency of release agent removal operation.

In a preferred method for removing a mold release agent, the mold release agent is removed without affecting tire performance because the depth of the dents from the tire surface before formation of the dent to the deepest point after formation of the dent is less than 10 µm.

Also, the dents are preferably each formed such that the depth of the dent gets shallower from the deepest point toward the edge thereof. Hence, cracking due to the formation of the dents can be prevented even when repeated distortions act on the dents by the flexure of the tire in motion.

In still another preferred method for removing a mold release agent, the interval between the deepest points of adjoining dents is 100 µm or less. Accordingly, the ink drops can be fitted into the dents forming the adherend region, and thus the ink layer can be made to adhere fast to the tire surface.

In yet another preferred method for removing a mold release agent, the depth of the dent from the tire surface before formation of the dent to the deepest point after formation of the dent is 8 µm or less. Hence, cracking due to the formation of the dents can be more effectively prevented even when repeated distortions act on the dents by the flexure of the tire in motion.

In still another preferred method for removing a mold release agent, laser light is irradiated at a slant relative to the slanted direction of the tire surface. Therefore, the dripping of ink drops can be prevented with the deepest points of the dents located on the lower side of the tire surface.

And a tire according to the invention to solve the above-mentioned problem has an adherend region on a side surface of the tire of a plurality of dents shallower than 10 µm in depth from which the mold release agent has been removed and having mold release agent present on the side surface other than the adherend region. Thus, a printing process or sealing process as the post-process can be carried out to the adherend region with improved adhesion of ink or sealant to the side surface of the tire because the surface area of the adherend region is wide relative to the areas other than the adherend region.

### BRIEF DESCRIPTION OF THE DRAWINGS

FIG. 1 is an illustration showing an embodiment of a mold release agent removal apparatus.
FIG. 2 is a schematic depiction of laser irradiation to the side surface.
FIG. 3 is a conceptual illustration showing a shape measurement on the side surface.
FIG. 4 is illustrations showing the irradiation range and irradiation routes of laser light.
FIG. 5 is illustrations depicting the motion control of the irradiation head in the tire radial direction.
FIG. 6 is illustrations showing the cross-sectional shapes of dents in the tire radial direction.
FIG. 7 is an illustration showing irradiation intervals of laser light.
FIG. 8 is an illustration showing the irradiation control of laser light.
FIG. 9 is a conceptual illustration showing a printing process. FIG. 10 is photos showing experimental examples.

### MODE FOR CARRYING OUT THE INVENTION

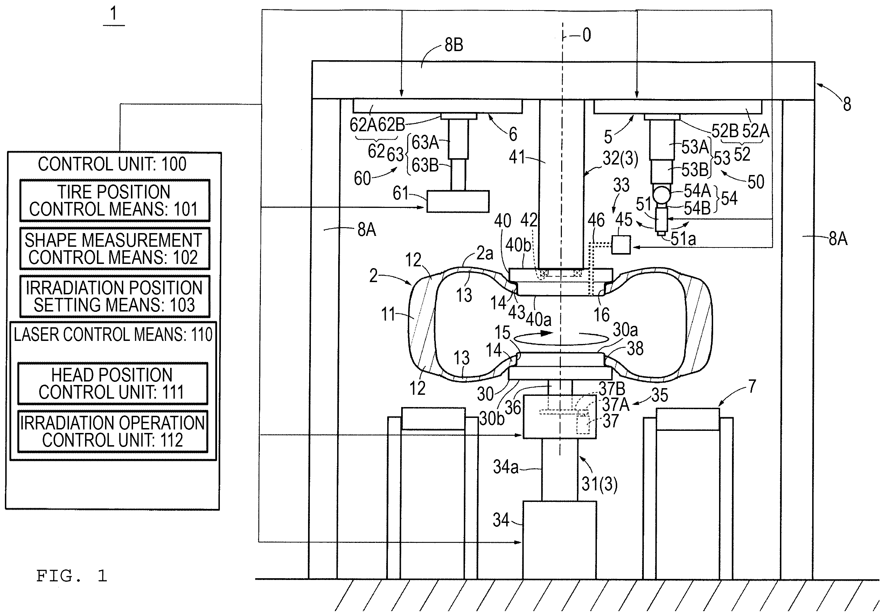

FIG. 1 is an illustration showing an embodiment of a mold release agent removal apparatus. As shown in the illustration, the mold release agent removal apparatus 1 includes a tire positioning unit 3, which positions and holds horizontally a tire 2 with the mold release agent to be removed adhering thereto, a laser irradiation unit 5, which irradiates a laser light to one of the side surfaces 2a of the tire 2, and a shape measuring unit 6, which measures the surface shape of the tire 2.

The tire 2, which is cure-molded by a not-shown cure-molding apparatus, includes a tread region 11, shoulder regions 12, sidewall regions 13, and bead regions 14. The shoulder regions 12 extend from their respective ends of a cylinder of the tread region 11. The sidewall regions (hereinafter referred to as "sides") 13 extend from their respective shoulder regions 12 toward the rotation center axis O of the tire 2. The bead regions 14 are formed at their respective ends of the sides 13.

The inner and outer peripheral surfaces of the tire 2 have adhesions of the mold release agent having been applied to the mold and bladder surfaces in the cure-molding process and transferred thereto after the process. It is to be noted that the following description covers only the case where the mold release agent adhering to a side surface 2a of the outer peripheral surface of the tire is removed. The tire 2 is conveyed in a horizontal position by a conveying unit 7 to the mold release agent removal apparatus 1 consisting of a tire positioning unit 3, a laser irradiation unit 5, and a shape measuring unit 6.

The tire positioning unit 3 includes a lower support mechanism 31, which supports a lower rim body 30 from below, an upper support mechanism 32, which supports an upper rim body 40 from above, and an air injection unit 33. The lower rim body 30 and the upper rim body 40, which are disposed in such positions as to seal the rim fitting holes 15 and 16 enclosed by the end portions of the lower and upper bead regions 14, support the tire 2 rotatably by holding it from below and above. The lower support mechanism 31 supports the lower rim body 30 by means of a lifting unit 34, a rotating unit 35, and a rotating shaft 36. The lifting unit 34, which has an up-and-down motion shaft 34a movable up and down, moves the up-and-down motion shaft 34a up and down by the action of a hydraulic jack mechanism or a ball screw and linear motion guide mechanism, for instance. The rotating unit 35 includes a motor 37, a gear 37A attached to the output shaft of the motor 37, and a driven gear 37B rotating in mesh with the gear 37A. The rotating unit 35 rotates the rotating shaft 36 to which the driven gear 37B is attached by conveying a rotary drive force of the motor 37 to the driven gear 37B. The motor 37, which is coupled to a control unit 100 to be discussed later, performs a rotary drive based on the control signal outputted from the control unit 100.

The lower rim body 30 is fixed on the rotating shaft 36 coaxially with the axis thereof with the smaller-diameter surface 30a up and the larger-diameter surface 30b down. The lower rim body 30 is approximately trapezoidal in cross-sectional shape. It has a stepped periphery, that is, the larger-diameter surface 30b at the bottom having a larger concentric circle and the smaller-diameter surface 30a at the top having a smaller concentric circle. And the lower rim body 30 has an engaging portion 38 to engage with the rim fitting hole 15 of the tire 2. The engaging portion 38 is fitted into the rim fitting hole 15 to seal the opening and supports the tire 2 from below by aligning the rotation center axis O of the tire 2 with the center axis of the lower rim body 30. In this manner, the engaging portion 38 conveys rotative force to the tire 2.

As shown in FIG. 1, the upper support mechanism 32 is installed on a portal frame 8 standing astride the conveying unit 7. The frame 8 is constituted by a pair of support posts 8A installed upright from the floor to extend above the upper side surface 2a of the tire 2 having been brought here and a horizontal frame 8B bridging between the pair of support posts 8A.

The upper support mechanism 32 has a support shaft 41 extending downward from the horizontal frame 8B and an upper rim body 40 that holds the tire 2 jointly with the lower rim body 30. The support shaft 41 is fixed to the horizontal frame 8B coaxially with the lower rim body 30 of the lower support mechanism 31.

The upper rim body 40 is approximately a conical body, which is inversely trapezoidal, vertically symmetrical to the lower rim body 30, in cross-sectional shape having a stepped periphery as with the lower rim body 30. The upper rim body 40 has a smaller-diameter surface 40a at the bottom and a larger-diameter surface 40b at the top attached to the support shaft 41 such that the shaft center of the support shaft 41 is aligned with the center axis of the upper rim body 40, that is, the rotation center axis O of the tire 2. The upper rim body 40 is configured to be rotatable via a bearing 42 or the like provided at the lower end of the support shaft 41. The upper rim body 40 has an engaging portion 43 forming a stepped portion from the larger-diameter surface 40b side to the smaller-diameter surface 40a side. The engaging portion 43 is fitted into the rim fitting hole 16 to seal the opening and supports the tire 2 from above by aligning the rotation center axis O of the tire 2 with the center axis of the lower rim body 30.

The air injection unit 33 has an air supply source 45 and an air supply passage 46. The air supply source 45 consists of a compressor, for instance. The air supply passage 46 is constituted, for instance, by a communication passage penetrating from the smaller-diameter surface 40a to the larger-diameter surface 40b of the upper rim body 40 and a not-shown communication tube connecting between the air outlet of the compressor and the communication passage.

The tire positioning unit 3 raises the lower rim body 30 by driving the lifting unit 34 of the lower support mechanism 31 to have the engaging portion 38 of the lower rim body 30 fitted into the lower rim fitting hole 15. Then the tire positioning unit 3 raises the tire 2 until the engaging portion 38 of the upper rim body 40 is fitted into the upper rim fitting hole 16 of the tire 2, thus holding the tire 2 between the lower rim body 30 and the upper rim body 40. Then air is injected into the tire 2 by driving the air injection unit 33 to create an airtight condition by ensuring tight contact between the hole edge of the lower rim fitting hole 15 and the outer periphery of the lower rim body 30 and between the hole edge of the upper rim fitting hole 16 and the outer periphery of the upper rim body 40, respectively. Next, the rotating unit 35 is driven to give a rotative force to the lower rim body 30. This will convey the rotative force of the lower rim body 30 to the upper rim body 40 via the tire 2, thereby making the tire 2 rotatable in the forward and reverse directions together with the lower and upper rim bodies 30 and 40.

The laser irradiation unit 5 includes an irradiation head 51 for directing laser light to the side surface 2a of the tire 2 and an irradiation head movement mechanism 50 for changing the position and orientation of the irradiation head 51 relative to the side surface 2a. The irradiation head movement mechanism 50 is comprised of a radial movement mechanism 52 for adjusting the position of the irradiation head 51 in the radial direction of the tire 2, a vertical (height direction) movement mechanism 53 for adjusting the position of the irradiation head 51 in the vertical (height) direction relative to the side surface 2a of the tire 2, and an irradiation direction adjusting mechanism 54 for adjusting the direction of laser light emitted by the irradiation head 51.

The radial movement mechanism 52 is, for instance, a linear guide that consists of a rail 52A and a slider 52B moving along the rail 52A. The rail 52A is attached to the horizontal frame 8B in such a manner as to extend in the radial direction of the upper and lower rim bodies 40 and 30 and allows the movement of the slider 52B in its extension direction by the drive of a not-shown drive means.

The vertical movement mechanism 53 is, for instance, a linear guide that has a rod 53B movable forward and back from a cylinder case 53A. The rod 53B, which is held inside the cylinder case 53A, advances and retracts in the axis direction of the cylinder case 53A, driven by a not-shown drive means. The vertical movement mechanism 53 is configured such that the tip of the rod 53B faces downward with its advance and retract direction in parallel with the extension direction of the tire rotation center axis O and the end of the cylinder case 53A is fixed to the slider 52B of the radial movement mechanism 52.

The irradiation direction adjusting mechanism 54 is, for instance, a rotary actuator that consists of a disk-shaped case 54A and an arm 54B rotating about the center axis of the case 54A as the axis. The irradiation direction adjusting mechanism 54 is attached to the lower end of the rod 53B of the vertical movement mechanism 53 in such a manner that the rotation axis of the arm 54B relative to the case 54A is perpendicular to the extension direction of the rail 52A of the radial movement mechanism 52. That is, the irradiation direction adjusting mechanism 54 is attached to the vertical movement mechanism 53 such that the arm 54B rotates along the radial direction of the tire 2.

The irradiation head 51, attached to the tip of the arm 54B of the arm 54B, outputs laser light emitted by a not-shown oscillator. The irradiation head 51, which has a lens 51a for focusing laser light, directs the laser light focused by the lens 51a to the tire surface. The irradiation head 51 is disposed at a predetermined distance apart from the side surface 2a.

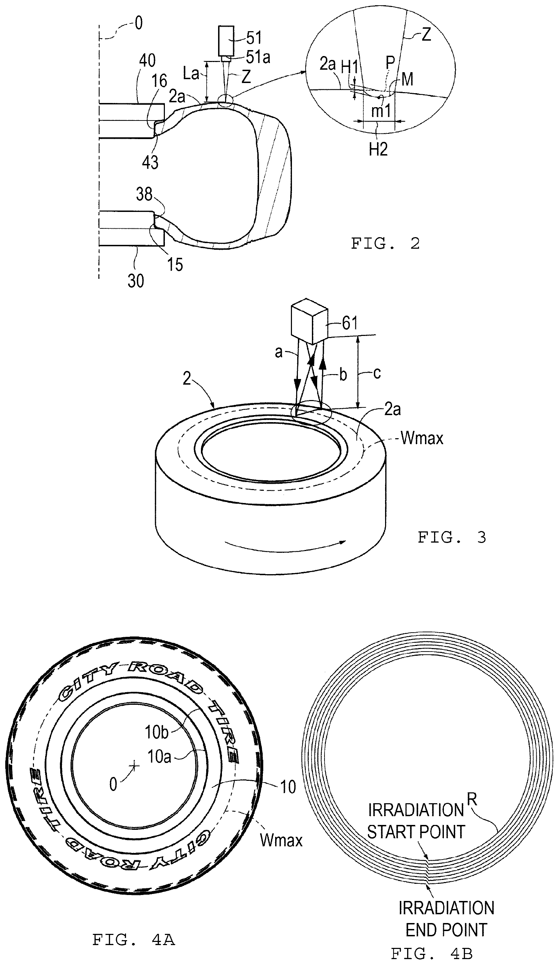

FIG. 2 is an illustration depicting how a dent M is formed with part of rubber removed by the irradiation of laser light Z to the side surface 2a. As shown in the illustration, when the laser light Z is directed to the side surface 2a from the irradiation head 51, the rubber in the irradiated spot to which the laser light Z is directed is sublimed by the energy of the laser light Z. This will remove the rubber together with the mold release agent from the side surface 2a, thus forming the dent M. The irradiation distance La of the laser light Z outputted from the irradiation head 51 is so set as to create the dent M in a size of which the depth H1 from position P of the side surface 2a before the irradiation of laser light Z to the deepest point m1 after the irradiation is shallower than 10 µm and the diameter H2 of the rim (edge) of the dent M is 90 µm, for instance. As a result, the mold release agent can be removed without leaving effects affecting the performance of the tire. The irradiation distance La is adjusted to be slightly dislocated from the focal range of the lens 51a in the direction apart from or closer to the focal range relative to the side surface 2a, for instance. Accordingly, the dent M can be formed such that the diameter thereof is adjusted and the depth thereof is the greatest at the center and gradually shallower toward the edge. As a consequence, it is possible to prevent cracking due to the formation of the dents even when repeated distortions act on the dents by the flexure of the tire in motion. As for the depth of the dent M, the depth H1 to the deepest point m1 is more preferably shallower than 8 µm. This will more effectively prevent the occurrence of cracking due to the formation of the dents even when repeated distortions act on the dents in the motion of the tire.

The laser light Z in this application may feature, for example, wavelength: 1090 [nm], output: 20 [kHz], irradiation distance La: 300±21 [mm], and frequency: 60 k to 120 [kHz] . Note that the type of laser light Z to be used may be any of fiber laser, YAG laser, CO2 laser, and the like. An appropriate type should be selected for the removal of rubber in consideration of the properties of the rubber constituting the surface of the tire 2.

It is to be noted that emission of laser from the irradiation head 51 is not limited to the method as described so far. The laser light having greater energy than the above-described laser light may be emitted in a shorter time. Or the laser light having smaller energy than the above-described laser light may be emitted in a longer time. However, irradiation of laser light for a long time can overheat the irradiated spot on the tire surface, which can cause changes in the properties of the rubber, such as the hardening of rubber around the dent M. Therefore, the type and output level of laser light should be so set as to form the dent M of the above-described dimensions in as short a time as possible.

Referring back to FIG. 1, the shape measuring unit 6 includes a measuring sensor 61 for measuring the shape of the side surface 2a two-dimensionally and a sensor movement mechanism 60. The sensor movement mechanism 60 is comprised of a radial movement mechanism 62 for adjusting the position of the measuring sensor 61 in the radial direction of the tire 2 and a vertical (height direction) movement mechanism 63 for adjusting the vertical position of the measuring sensor 61 relative to the side surface 2a of the tire 2.

The radial movement mechanism 62 is, for instance, a linear guide that consists of a rail 62A and a slider 62B. The rail 62A is attached to the horizontal frame 8B in such a manner as to extend in the radial direction of the upper and lower rim bodies 40 and 30 and allows the movement of the slider 62B in its extension direction by the drive of a not-shown drive means.

The vertical movement mechanism 63 is, for instance, a linear guide that has a rod 63B movable forward and back from a cylinder case 63A. The rod 63B, which is held inside the cylinder case 63A, advances and retracts in the axis direction of the cylinder case 53A, driven by a not-shown drive means. The vertical movement mechanism 63 is configured such that the tip of the rod 63B faces downward with its advance and retract direction in parallel with the extension direction of the tire rotation center axis O and the end of the cylinder case 63A is fixed to the slider 62B of the radial movement mechanism 62.

The measuring sensor 61 is attached to the lower end of the rod 63B of the vertical movement mechanism 63. The measuring sensor 61 is disposed in a position above and opposite to the side surface 2a which is set as the position for removal of the mold release agent. The measuring sensor 61 directs, for instance, a sheet-like light (hereinafter referred to as "slit light a") to the side surface 2a in such a manner as to extend in the radial direction of the tire 2 held horizontally. And the measuring sensor 61 measures the cross-sectional shape (profile) of the illuminated range to which the slit light a is directed and the distance from the measuring position of the measuring sensor 61 to the tire surface by receiving the reflected light b reflected from the side surface 2a. That is, the measuring sensor 61 is a three-dimensional measuring equipment for simultaneously acquiring both the distance information c of the distance from the illuminating position of the slit light a to the illuminated portion on the side surface 2a and the height information representing the three-dimensional shape of the tire surface. The illuminated range to which the slit light a is directed from the measuring sensor 61 is so set as to cover both the printing range, should a printing be done on the tire surface in a post-process, and the maximum tire width portion Wmax indicated by a virtual line (two-dot chain line) in the illustration. The positional relationship between the irradiation head 51 of the laser irradiation unit 5 and the measuring sensor 61 of the shape measuring unit 6 with reference to the equipment origins of the units 5 and 6 is stored in advance in the control unit 100 to be discussed later.

The control unit 100, which is, so to speak, a computer, includes a CPU as a computing means, a ROM and RAM as storage means, and an I/O interface as a communication means. Stored in the storage means are a control program for controlling the operations for removal of mold release agent, master data on the external forms of different types of tires having adhesions of mold release agent, removal positions of mold release agent, and the like. The control unit 100 outputs signals to the tire positioning unit 3, the shape measuring unit 6, and the laser irradiation unit 5 by executing the control program and has them perform the operations of mold release agent removal on the side surface 2a of the tire 2. The control unit 100 also stores the tire inside diameter and tire thickness according to the tire size inputted from a not-shown input means and adjusts the rising position of the lower rim body 30 relative to the tire 2.

As shown in FIG. 1, the control unit 100 includes a tire position control means 101, a shape measurement control means 102, an irradiation position setting means 103, and a laser control means 110. The tire position control means 101 controls the up-and-down motion of the up-and-down motion shaft 34a on the tire positioning unit 3, the rotating operation of the lower rim body 30, and the air supply operation of the air supply source 45.

The shape measurement control means 102 controls the on-off operation of the measuring sensor 61 of the shape measuring unit 6 and the positioning operation of the measuring sensor 61 by the sensor movement mechanism 60.

The irradiation position setting means 103 compares the shape data acquired by the measuring sensor 61 against the master data stored in the storage means and calculates the positional dislocation in the circumferential direction of the measurement start position of the shape data relative to the three-dimensional shape stored as the master data. This positional dislocation is calculated in pixels by performing a pattern matching between the master data and the shape data, for instance.

Next, based on the calculated positional dislocation, the irradiated region of laser light Z is set in the shape data using the measurement start position as the reference point. Further, irradiation route data is set for the irradiation path of laser light Z directed to within the irradiated region. It should be noted here that the measurement start position as used herein refers to the position where a shape measurement is started.

Hereinbelow, a description is given of an example of generating the irradiation route data R.

FIG. 4A shows an irradiated region 10 of laser light Z on the side surface 2a, and FIG. 4B illustrates irradiation route data R to be set in the irradiated region 10. The irradiated region 10 shown in FIG. 4A is the range where a white ribbon is printed in a post-process. When the irradiated region 10 is continuous in the circumferential direction, the irradiation route data R, as shown in FIG. 4B, is so set that the irradiation head 51 makes a movement from radially inner side 10a to radially outer side 10b or from radially outer side 10b to radially inner side 10a after each full circle of the tire 2 when it is rotated continuously in one direction. With the irradiation route data R set in this manner, the irradiation of laser light Z to the irradiated region 10 can be accomplished efficiently. It is to be noted that the radial movement distance of the irradiation head 51 is set based on the diameter of the dent M formed by the irradiation of laser light Z such that when the irradiation head 51 is moved radially outward or inward, the dent M formed before the movement and the dent M formed after the movement have their edges overlapped with each other.

Next, the irradiation position setting means 103 generates tire rotation data to be outputted to the tire position control means 101 for rotating the tire 2 and movement data for the irradiation head 51 to be outputted to the laser control means 110, according to the irradiation route data R. The tire rotation data, as shown in FIG. 4B, is outputted to the tire position control means 101 as the number of rotations of the tire 2.

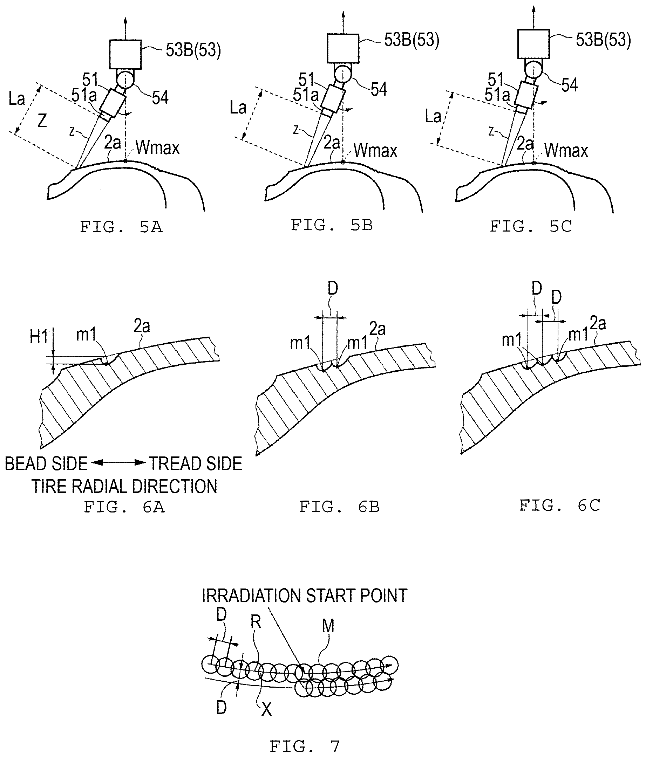

FIGS. 5A to 5C are illustrations depicting the motion of the irradiation head 51 when it is moved in the tire radial direction. The head movement data is generated as follows. The movement distance for positioning the irradiation head 51 directly above the maximum tire width portion W max by operating the radial movement mechanism 52 from the equipment origin of the laser irradiation unit 5 is set based on the shape data acquired by the shape measuring unit 6. Next, the vertical movement distance of the vertical movement mechanism 53 and the rotation angle of the irradiation direction adjusting mechanism 54 are set such that the distance from the irradiation start point of the irradiation route data R to the lens 51a of the irradiation head 51 positioned directly above the maximum tire width portion Wmax becomes the irradiation distance La.

Next, with the irradiation start point as the start point, as shown in FIGS. 5A to 5C, the vertical movement distance of the vertical movement mechanism 53 and the rotation angle of the irradiation direction adjusting mechanism 54 are set such that the irradiation distance La is maintained with the rotation center of the irradiation head 51 positioned directly above the maximum tire width portion Wmax when the irradiation position in the irradiation route data R moves from radially inner side to radially outer side.

FIGS. 6A to 6C are illustrations showing the cross-sectional shapes in the tire radial direction of dents M formed by irradiation of laser light Z.

As described above, the irradiation head 51 is positioned above the maximum width of the tire 2, and the laser light Z emitted from the irradiation head 51 is directed to the side surface 2a at a slant by controlling only the vertical movement distance of the vertical movement mechanism 53 and the rotation angle of the irradiation direction adjusting mechanism 54. As a result, the dent M is formed on the slant with the tire inner peripheral side of the dent M deeper and the outer side thereof shallower. Thus the dripping of ink drops can be prevented when printing is done on the side surface 2a of the tire 2 in a post-process.

The laser control means 110 includes a head position control unit 111 for controlling the position of the irradiation head 51 and an irradiation operation control unit 112 for controlling the output operation of laser light Z outputted from the irradiation head 51.

The head position control unit 111 controls the operation of the irradiation head movement mechanism 50 based on the head movement data outputted from the irradiation position setting means 103. That is, the irradiation position and direction of laser light Z is controlled relative to the side surface 2a of the tire 2.

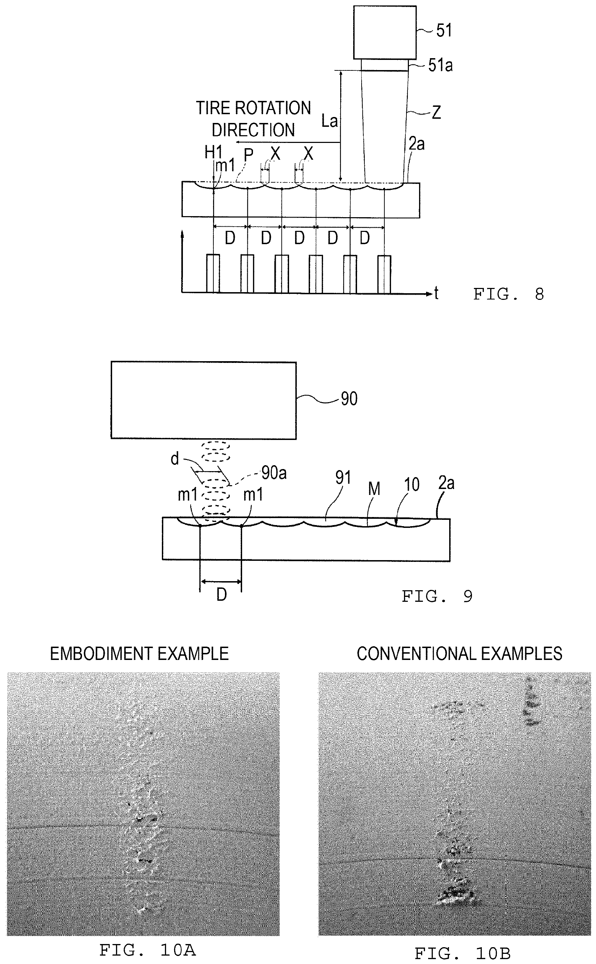

FIG. 7 is an illustration showing the irradiation interval of laser light, and FIG. 8 is an illustration schematically depicting the irradiation control of laser light. As shown in FIG. 8, the irradiation operation control unit 112 controls the on-off operation of laser light Z emitted from the irradiation head 51. The irradiation operation control unit 112 outputs pulse signals to the irradiation head 51 for controlling the irradiation time and interval so that laser light Z is outputted intermittently in accordance with the speed of the irradiation head 51 moved by the control of the head position control unit 111. For example, control is performed such that the pulse interval is made shorter for faster movement of the irradiation head 51 and longer for slower movement thereof. When the laser light Z is irradiated along the irradiation route R, the pulse interval as illustrated in FIG. 8 is so set that the adjoining dents M formed on the side surface 2a have overlapped edges as shown in FIG. 7 and FIG. 8. For example, when an ink layer is to be formed in a post-process with ink drops applied to the side surface 2a in an ink-jet system, the pulse width is controlled according to the rotation speed of the tire such that the interval D between the deepest points m1 of the adjoining dents M is greater than the diameter d of an ink drop 90a discharged from the printing head 90 of the ink-jet system and smaller than 100 µm, for instance. Accordingly, it is possible to fit ink drops surely in the dents constituting the adherend region, thus having an ink layer adhere firmly to the tire surface.

It is to be noted that intermittent output of laser light Z meant herein includes on-off control of irradiation of laser light Z at a constant frequency or switching control of the intensity of the laser light Z at a constant frequency. Also, the irradiation operation control unit 112 has been described to control the pulse interval for irradiation of laser light from the irradiation head 51 in accordance with the speed of movement of the irradiation head 51 by the operation of the head position control unit 111. However, the arrangement may be such that the irradiation head movement mechanism 50 is so controlled as to adjust the speed of movement of the irradiation head 51 at a constant pulse interval.

Hereinbelow, a description is given of a mold release agent removal operation by the mold release agent removal apparatus 1. It should be noted that the following explanation of the operation assumes that the operation is done in preparation for a process of printing a white ribbon on the side surface 2a of the tire 2 as a post-process. When the tire 2 is brought in by the conveying unit 7, a not-shown barcode reader disposed above the conveyance route of the conveying unit 7 reads the barcode affixed on the side surface 2a of the tire 2. And the type information on the tire 2 is outputted to the tire position control means 101. Then the tire position control means 101 acquires the tire information and the printing information of the post-process associated with the type information on the tire 2 by reading them out from the storage means. The tire information meant here refers to the size or the like of the tire 2, whereas the printing information refers to kinds of information to be printed in specific regions of the side surface 2a of the tire 2.

Next, a tire positioning process is performed by the tire position control means 101. When a not-shown sensor provided on the conveying unit 7 detects that the tire 2 has been brought to the mold release agent removal position, the tire position control means 101 outputs a signal to the lifting unit 34 to move the lower rim body 30 up to the height corresponding to the tire information read from the barcode. In response to this, the engaging portion 38 of the lower rim body 30 is fitted into the rim fitting hole 15 opening on the lower side of the tire 2. At the same time, the engaging portion 43 of the upper rim body 40 is fitted into the rim fitting hole 16 opening on the upper side of the tire 2.

Next, the tire position control means 101 outputs an air injection signal to the air injection unit 33, thereby supplying air into the tire 2 from the air supply source 45 to apply a predetermined internal pressure to the tire 2. As a result, the tire 2 is supported by the upper and lower rim bodies 40 and 30, with the rim fitting holes thereof coming in close contact with the engaging portions 43 and 38 of the upper and lower rim bodies 40 and 30.

On completion of air supply into the tire 2, the tire position control means 101 sends a signal to the shape measurement control means 102 indicating the readiness for shape measurement of the side surface 2a.

Next, a shape measuring process is performed by the shape measurement control means 102.

The shape measurement control means 102 adjusts the position of the measuring sensor 61 by driving the sensor movement mechanism 60 such that the range of slit light emitted from the measuring sensor 61 covers the printing range and the maximum tire width portion Wmax, that is, the irradiated region 10 of laser light Z in the tire radial direction and the maximum tire width portion Wmax.

On completion of position adjustment of the measuring sensor 61, the shape measurement control means 102 outputs a signal to the tire position control means 101 to start shape measurement. This will drive the rotating unit 35 and turn on the measuring sensor 61 to measure the shape of the side surface 2a.

Upon completion of one revolution of the tire 2, the tire position control means 101 outputs a signal to the shape measurement control means 102 indicating the completion of one revolution of the tire 2 to end the shape measurement by the measuring sensor 61. In this manner, the shape of the side surface 2a for a full circle of the tire 2 is acquired as the shape data, and at the same time the distance from the measuring position of the measuring sensor 61 to the tire surface is acquired as the distance data. The shape data and the distance data acquired by the measuring sensor 61 are outputted to the irradiation position setting means 103.

The irradiation position setting means 103 reads out the master data corresponding to the tire 2, compares the shape data against the master data, and calculates the positional dislocation in the circumferential direction of the measurement start position of the shape data relative to the master data.

Next, the printing region in the post-process contained in the master data is corrected by the positional distortion from the shape data, and the range corresponding to the corrected printing region is set as the irradiated region 10 of laser light Z. Then the irradiation route data R is generated such that the laser light Z scans the inside of the irradiated region 10 continuously.

Next, based on the irradiation route data R, the tire rotation data to be outputted to the tire positioning unit 3 and the head position data to be outputted to the laser irradiation unit 5 are generated, and the respective data are outputted to the tire position control means 101 and the laser control means 110.

Next, a laser irradiation process is performed by the laser control means 110. Firstly, the head position control unit 111 of the laser control means 110 drives the radial movement mechanism 52, based on the head position data, to position the irradiation head 51 above the maximum tire width portion Wmax.

Next, the vertical movement mechanism 53 and the irradiation direction adjusting mechanism 54 are operated such that the distance to the irradiation start position of the irradiation route data R becomes the irradiation distance La. Thus the vertical position and the irradiation direction of the irradiation head 51 are set. It is to be noted that positioning the irradiation head 51 above the maximum tire width portion Wmax meant here refers to the state in which the rotation axis of the arm 54B of the irradiation direction adjusting mechanism 54 attached to the irradiation head 51 is positioned on the extension line of the maximum tire width portion Wmax in parallel with the rotation center axis of the tire 2.

On completion of the positioning of the irradiation head 51, the laser control means 110 causes the operation of the rotating unit 35 of the tire position control means 101 by outputting a signal thereto. Also, the laser control means 110 operates intermittent irradiation of laser light Z by controlling the irradiation operation control unit 112 and at the same time moves the vertical movement mechanism 53 and the irradiation direction adjusting mechanism 54 according to the head position data by controlling the irradiation position control unit 111. Note that the rotation of the tire 2 by the rotating unit 35 and the emission of the laser light Z from the irradiation head 51 are started in synchronism with each other. The irradiation operation control unit 112 controls the pulse width of laser light Z to be outputted intermittently according to the rotation speed of the rotating unit 35 of the tire 2 such that the irradiation interval in the circumferential direction of the side surface 2a is constant and the adjoining irradiation spots have overlapped portions X.

Upon completion of a full circle of irradiation at the same radius, the head position control unit 107 controls the vertical movement mechanism 53 and the irradiation direction adjusting mechanism 54 to move the irradiation position in the radial direction while maintaining the irradiation distance La of laser light Z.

With this operation repeated until the arrival of the irradiation end point of the irradiation route data R, the printing region for a white ribbon on the side surface 2a is formed by a plurality of dents M arranged in regular undulations having overlapped portions X. This printing region is created by the removal of mold release agent together with rubber by the formation of the dents M.

And the tire 2, when the mold release agent removal process has been completed for the side surfaces 2a on both sides thereof, is conveyed by a not-shown conveyance means to the printing process, which is a post-process. There a printing is carried out in which ink drops 90a are discharged from the printing head 90 and applied on the printing region in an ink-jet system.

FIG. 9 is a schematic illustration depicting a printing process. As shown in the illustration, the diameter d of an ink drop 90a discharged from the printing head 90 in an ink-jet system is smaller than the distance between the deepest points m1 of the adjoining dents M. Therefore, the ink drops 90a discharged from the printing head 90 do not lie afloat astride the dents M due to surface tension, but fit properly into the dents M and adhere there. Thus the ink drops 90a are stacked to fill the dents M and form an ink layer 91 on the tire surface.

### Exemplary Embodiment

FIG. 10A is a photo showing a state of a white ink layer formed on the side surface 2a after the removal of mold release agent from the tire surface by the method of the present invention after it is scraped with a coin. And FIG. 10B is a photo showing a state of a white ink layer formed on the side surface 2a after the removal of mold release agent from the tire surface by a conventional method (wiping with a washing agent) after it is scraped with a coin.

As shown in FIG. 10A, the case of the mold release agent removed by the method of the present invention shows only chipped portions in some parts of the ink layer and mostly scratches on the ink layer and no major peelings.

On the other hand, as shown in FIG. 10B, the case of the mold release agent removed by the conventional method shows both scratches and major peelings on the ink layer.

From the above results, it is clear that the present invention can improve the adhesion of the formed ink layer to the tire surface.

As described thus far, according to the present invention, the intensity of laser light irradiated to the tire surface can be kept constant by maintaining a constant irradiation distance, such that the dents M can be formed by laser irradiation at a constant maximum depth. Moreover, the dents M formed in this manner have the centers thereof on the slant with respect to the tire surface and the edges thereof closer to the tire center steeper as shown in FIG. 6. As a result, the dripping of ink or such other liquid out of the dents M can be prevented when ink or such other liquid is applied there.

Also, in the foregoing embodiment, the irradiation distance of laser light to the tire surface is so controlled as to be constant by holding the irradiation head 51 in a fixed position in the tire radial direction and moving and adjusting the orientation of the irradiation head 51 relative to the tire surface by operating the vertical movement mechanism 53 and the irradiation direction adjusting mechanism 54. However, the arrangement may be such that the irradiation distance of laser light emitted from the irradiation head 51 is so controlled as to be constant relative to the tire surface by constantly irradiating laser light from the normal direction of the tire surface by operating the radial movement mechanism 52, the vertical movement mechanism 53, and the irradiation direction adjusting mechanism 54.

In this manner, a plurality of dents with regular undulations are formed to fill the whole adherend region of an adherend. And when, for instance, an adherend, such as a sealant, absorbent, or tire monitoring device, is to be affixed to the inner peripheral surface of the tire using an adhesive, the adhesion area where the adhesive adheres becomes larger than that before the formation of the dents M and hence the adherend can be affixed more strongly to the tire surface.

For example, when an adherend is to be affixed to the inner peripheral surface of the tire using an adhesive, the tire may be supported rotatably by the lower rim body 30 only of the mold release agent removal apparatus 1. That is, the mold release agent removal apparatus 1 of the foregoing embodiment may be used by excluding the upper rim body 40, the support shaft 41, and the air injection unit 33 therefrom. And the tire 2 is held with the lower rim fitting hole thereof engaged with the engaging portion 38 of the lower rim body 30 shown in FIG. 1. Then the sensor movement mechanism 60 and the irradiation head movement mechanism 50 may be operated in such a manner that the measuring sensor 61 and the irradiation head 51 enter into the interior of the tire 2 through the upper rim fitting hole.

The arrangement may also be such that the sensor movement mechanism and the irradiation head movement mechanism are structured by robot arms having a plurality of joints and the above-described operations are performed with the irradiation head 51 and the measuring sensor 61 attached to the ends of their respective arms. For example, with robot arms of 5 degrees of freedom, there is no need for the tire positioning unit 3, and the mold release agent can be removed from the tire 2 held horizontal as brought in by the conveying unit 7 or from the tire 2 held vertical by a simple support mechanism.

### Description of Reference Numerals

- 1: mold release agent removal apparatus
- 2: tire
- 2a: side surface
- 3: tire positioning unit
- 5: laser irradiation unit
- 6: shape measuring unit
- 30, 40: rim body
- 38, 43: engaging portion
- 51: irradiation head
- 61: measuring sensor
- 100: control unit
- M: dent

## Claims

1. A method for removing a mold release agent from an adherend region where an adherend is to be affixed to a side surface (2a) of a tire (2) after a cure-molding process, the method comprising:
moving along and intermittently irradiating a laser light having an intensity capable of removing rubber on the side (2a) surface of the tire (2) in the adherend region such that a plurality of dents (M) are formed in the adherend region with adjoining dents (M) having edges overlapped with each other.

2. The method for removing a mold release agent according to claim 1, wherein the depth of the dent (M) from the tire surface before formation of the dent to the deepest point after formation of the dent is less than 10 µm.

3. The method for removing a mold release agent according to claim 1 or claim 2, wherein the dent (M) is formed such that the depth of the dent (M) gets shallower from the deepest point toward the edge thereof.

4. The method for removing a mold release agent according to any of claims 1 to 3, wherein the interval between the deepest points of adjoining dents (M) is 100 µm or less.

5. The method for removing a mold release agent according to any of claims 1 to 4, wherein the depth of the dent (M) from the tire surface before formation of the dent to the deepest point after formation of the dent is 8 µm or less.

6. The method for removing a mold release agent according to claim 4 or claim 5, wherein laser light is irradiated at a slant relative to the slanted direction of the tire surface.

7. A tire having an adherend region on a side surface (2a) of the tire (2) of a plurality of dents (M) shallower than 10 µm in depth from which the mold release agent has been removed and having the mold release agent present on the side surface (2a) other than the adherend region.

## Patentansprüche

1. Verfahren zum Entfernen eines Formtrennmittels von einem Klebebereich, wo ein Klebeteil an einer Seitenfläche (2a) eines Reifens (2) nach einem Vulkanisierformvorgang befestigt werden soll, wobei das Verfahren Folgendes umfasst:
Fortbewegen und intermittierendes Ausstrahlen eines Laserlichts, das eine Intensität aufweist, die dazu in der Lage ist, Gummi auf der Seitenfläche (2a) des Reifens (2) im Klebebereich derart zu entfernen, dass eine Vielzahl von Vertiefungen (M) im Klebebereich gebildet wird, wobei benachbarte Vertiefungen (M) Kanten aufweisen, die miteinander überlappt sind.

2. Verfahren zum Entfernen eines Formtrennmittels nach Anspruch 1, wobei die Tiefe der Vertiefung (M) von der Reifenoberfläche vor der Bildung der Vertiefung bis zum tiefsten Punkt nach der Bildung der Vertiefung wenigster als 10 µm beträgt.

3. Verfahren zum Entfernen eines Formtrennmittels nach Anspruch 1 oder Anspruch 2, wobei die Vertiefung (M) derart geformt wird, dass die Tiefe der Vertiefung (M) vom tiefsten Punkt zur Kante derselben hin flacher wird.

4. Verfahren zum Entfernen eines Formtrennmittels nach einem der Ansprüche 1 bis 3, wobei der Abstand zwischen den tiefsten Punkten benachbarter Vertiefungen (M) 100 µm oder weniger beträgt.

5. Verfahren zum Entfernen eines Formtrennmittels nach einem der Ansprüche 1 bis 4, wobei die Tiefe der Vertiefung (M) von der Reifenoberfläche vor der Bildung der Vertiefung bis zum tiefsten Punkt nach der Bildung der Vertiefung 8 µm oder weniger beträgt.

6. Verfahren zum Entfernen eines Formtrennmittels nach Anspruch 4 oder Anspruch 5, wobei das Laserlicht in einer Neigung im Verhältnis zur geneigten Richtung der Reifenoberfläche ausgestrahlt wird.

7. Reifen, der einen Klebebereich auf einer Seitenfläche (2a) des Reifens (2) aus einer Vielzahl von Vertiefungen (M), die flacher als 10 µm in der Tiefe sind, aus denen das Formtrennmittel entfernt worden ist, aufweist und der das Formtrennmittel aufweist, das auf der Seitenfläche (2a) außer im Klebebereich vorhanden ist.

## Revendications

1. Procédé pour retirer un agent de démoulage depuis une région de matière adhérente au niveau de laquelle une matière adhérente doit être fixée sur une surface latérale (2a) d'un pneumatique (2) après un processus de moulage-vulcanisation, le procédé comprenant :
le déplacement, selon une course de déplacement, et l'irradiation par intermittence d'une lumière laser qui présente une intensité disposant de la capacité de retirer du caoutchouc sur la surface latérale (2a) du pneumatique (2) dans la région de matière adhérente de telle sorte qu'une pluralité de dents (M) soient formées dans la région de matière adhérente, des dents contiguës (M) comportant des bords en chevauchement les uns avec les autres.

2. Procédé pour retirer un agent de démoulage selon la revendication 1, dans lequel la profondeur de la dent (M) depuis la surface de pneumatique avant la formation de la dent jusqu'au point le plus profond après la formation de la dent est inférieure à 10 µm.

3. Procédé pour retirer un agent de démoulage selon la revendication 1 ou la revendication 2, dans lequel la dent (M) est formée de telle sorte que la profondeur de la dent (M) devienne moins profonde depuis le point le plus profond en direction de son bord.

4. Procédé pour retirer un agent de démoulage selon l'une quelconque des revendications 1 à 3, dans lequel l'intervalle entre les points les plus profonds de dents contiguës (M) est de 100 µm ou moins.

5. Procédé pour retirer un agent de démoulage selon l'une quelconque des revendications 1 à 4, dans lequel la profondeur de la dent (M) depuis la surface de pneumatique avant la formation de la dent jusqu'au point le plus profond après la formation de la dent est de 8 µm ou moins.

6. Procédé pour retirer un agent de démoulage selon la revendication 4 ou la revendication 5, dans lequel de la lumière laser est irradiée selon une inclinaison par rapport à la direction inclinée de la surface de pneumatique.

7. Pneumatique comportant une région de matière adhérente sur une surface latérale (2a) du pneumatique (2), laquelle région de matière adhérente est constituée par une pluralité de dents (M) moins profondes que 10 µm en termes de profondeur desquelles l'agent de démoulage a été retiré, et comportant l'agent de démoulage présent sur la surface latérale (2a) autre que la région de matière adhérente.
